# FASCICULE DE BREVET EUROPEEN

(11) **EP 3 892 910 B1**
(45) Date de publication et mention de la délivrance du brevet: **28.12.2022**
(21) Numéro de dépôt: 21163460.5
(22) Date de dépôt: 18.03.2021
(51) Int. Cl.: F17C 5/06

(54) **DISPOSITIF DE REMPLISSAGE DE RÉSERVOIRS DE GAZ SOUS PRESSION**
FÜLLVORRICHTUNG FÜR UNTER DRUCK STEHENDE GASTANKS
DEVICE FOR FILLING PRESSURISED GAS TANKS

(30) Priorité: 10.04.2020 FR 2003618
(43) Date de publication de la demande: 13.10.2021
(73) Titulaire: L'Air Liquide, société anonyme pour l'Étude et l'Exploitation des procédés Georges Claude, 75007 Paris (FR)
(72) Inventeur: WERLEN, Etienne, 78350 LES LOGES-EN-JOSAS (FR); DEVILLIERS, Clemence, 38360 SASSENAGE (FR)
(74) Mandataire: Air Liquide

(56) Documents cités:
- EP-A1- 3 409 998
- EP-A1- 3 409 999
- FR-A1- 3 086 367
- US-A1- 2017 102 110
- US-A1- 2019 178 447

## Description

L'invention concerne un dispositif de remplissage de réservoirs de gaz sous pression, en particulier de réservoirs d'hydrogène de véhicules.

L'invention concerne plus particulièrement un dispositif de remplissage de réservoirs de gaz sous pression, en particulier de réservoirs d'hydrogène de véhicules, comprenant un circuit de transfert de fluide comprenant une extrémité amont munie d'une pluralité de sources de fluide sous pression et une extrémité aval comprenant au moins deux terminaisons de distribution destinées chacune à être raccordées à des réservoirs distincts à remplir, chaque source comprenant une sortie de fluide raccordée à une vanne de sortie.

Dans certaines stations de remplissage, l'hydrogène est livré dans des conteneurs de gaz à haute pression (généralement des semi-remorques transportant des réservoirs tubulaires) divisés en plusieurs stockages indépendants (« banks » en anglais). Ces réservoirs sont équipés de vannes de sortie afin de sélectionner un stockage spécifique pour alimenter la station. En général, le ravitaillement se fait avec une stratégie d'équilibrages successifs de la pression entre les stockages et le réservoir du véhicule (en cascade). Ceci est utilisé en particulier dans des stations ne comprenant pas de compresseur.

Afin d'optimiser la logistique, la quantité d'hydrogène dans les stockages sources doit être réduite au minimum avant leur remplacement par des stockage sources pleins.

Pour ce faire, classiquement, l'équilibrage se fait d'abord avec des stockages sources à relativement basse pression, puis en avec les stockages sources à pression croissante.

Certaines stations de ravitaillement doivent être équipées de plusieurs terminaisons de distribution (« dispensers » en anglais). Ceci concerne par exemple les stations de remplissage de réservoirs de poids lourds ou devant approvisionner plusieurs réservoirs en même temps.

Généralement, les stations sont reliées aux stockages sources transportables via un raccordement. Dans cette configuration il n'est pas possible d'alimenter en même temps deux réservoirs à remplir ayant des pressions différentes (cf. EP1942300A1).

Ainsi, en cas de ravitaillement simultané de deux réservoirs il n'est pas possible d'optimiser entièrement la logistique, car le collecteur unique devra être connecté à un stockage source ayant une pression suffisante pour alimenter la terminaison de distribution la plus exigeante en terme de pression (ou débit). Le document US20030164202A1 décrit une station avec un organe de compression et plusieurs terminaisons distribution, une source et plusieurs stockages tampon fixes. Un dispositif de remplissage est également connu de US2019178447A1.

Les solutions connues ne permettent pas le remplissage simultané et optimisé de plusieurs véhicules avec des transferts en cascade à partir de sources distinctes, notamment des sources transportables. La logistique d'utilisation et d'approvisionnement des sources ne peut être optimisée.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce qu'au moins plusieurs des vannes de sortie sont raccordées en parallèles à chacune des au moins deux terminaisons de distribution via au moins deux conduites de transfert parallèles.

Par ailleurs, des modes de réalisation de l'invention peuvent comporter l'une ou plusieurs des caractéristiques suivantes :
- au moins une partie des vannes de sortie sont raccordées en parallèle à une même première conduite collectrice du circuit et en ce que les terminaisons de distribution sont également raccordées en parallèle à ladite première conduite collectrice via plusieurs conduites de transfert,
- la première conduite collectrice du circuit comprend un ensemble de vanne(s) d'isolement interposée(s) respectivement entre deux conduites de transfert adjacentes,
- une vanne de contrôle amont respective est disposée dans le circuit entre chaque vanne de sortie et les au moins deux conduites de transfert parallèles,
- une vanne de contrôle aval respective est disposée dans chaque conduites de transfert reliant les terminaisons de distribution aux sources,
- les conduites de transfert adjacentes n'ont pas de liaison fluidique entre elles, ou ont une liaison fluidique comprenant un organe de restriction configuré pour restreindre ladite liaison fluidique en réduisant la section de passage du fluide d'une conduite de transfert à l'autre à moins de 10%, préférentiellement moins de 0.1%, de la section de passage du fluide dans une conduite de transfert,
- les sources, les vannes de contrôle amont, et au moins une partie des conduites de transfert sont logés sur ou dans un support source formant une entité physique raccordée de façon amovible au reste du circuit du dispositif de remplissage,
- les conduites de transfert comportent chacune des organes de connexion fluidique amovibles formant des organes de liaison fluidique séparable entre la partie du circuit logée dans ou sur le support et l'autre partie du circuit reliée aux terminaisons de distribution,
- le circuit comprend plusieurs conduites de transfert, les terminaisons de distribution étant reliées en parallèles à plusieurs et de préférence à toutes les conduites de transfert via un ensemble de conduites aval munies de vannes aval,
- le circuit comprend des conduites aval comprenant respectivement les terminaisons de distribution, lesdites conduites aval comprenant chacune au moins un organe(s) fluidique parmi : un orifice calibré, une soupape de commande, un débitmètre, une vanne pilotée, une soupape de décharge, une portion flexible,
- au moins une partie des vannes sont des vannes pilotées. L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle illustrant la structure générale d'un exemple de dispositif selon l'invention,
[Fig. 2] représente une vue schématique et partielle illustrant la structure et le fonctionnement d'un premier exemple réalisation d'un dispositif selon l'invention,
[Fig. 3] représente une vue schématique et partielle illustrant la structure et le fonctionnement d'un deuxième exemple réalisation d'un dispositif selon l'invention,
[Fig. 4] représente une vue schématique et partielle illustrant la structure et le fonctionnement d'un troisième exemple réalisation d'un dispositif selon l'invention.

Le dispositif 1 de remplissage de réservoirs de gaz sous pression, en particulier de réservoirs d'hydrogène de véhicules, comprend un circuit de transfert de fluide comprenant une extrémité amont munie d'une pluralité de sources 2 à 10 de fluide sous pression (à gauche sur les représentations) et une extrémité aval (à droite sur les représentations) comprenant au moins deux terminaisons 11, 12, 13 de distribution destinées chacune à être raccordées à des réservoirs distincts à remplir (simultanément ou non et selon des profils de remplissages pouvant être distincts).

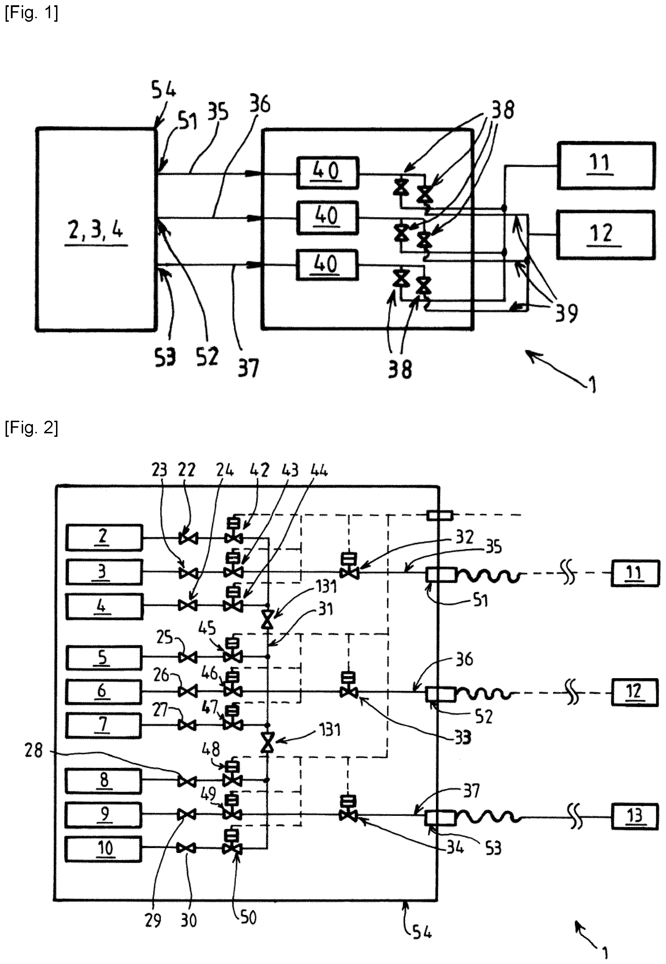

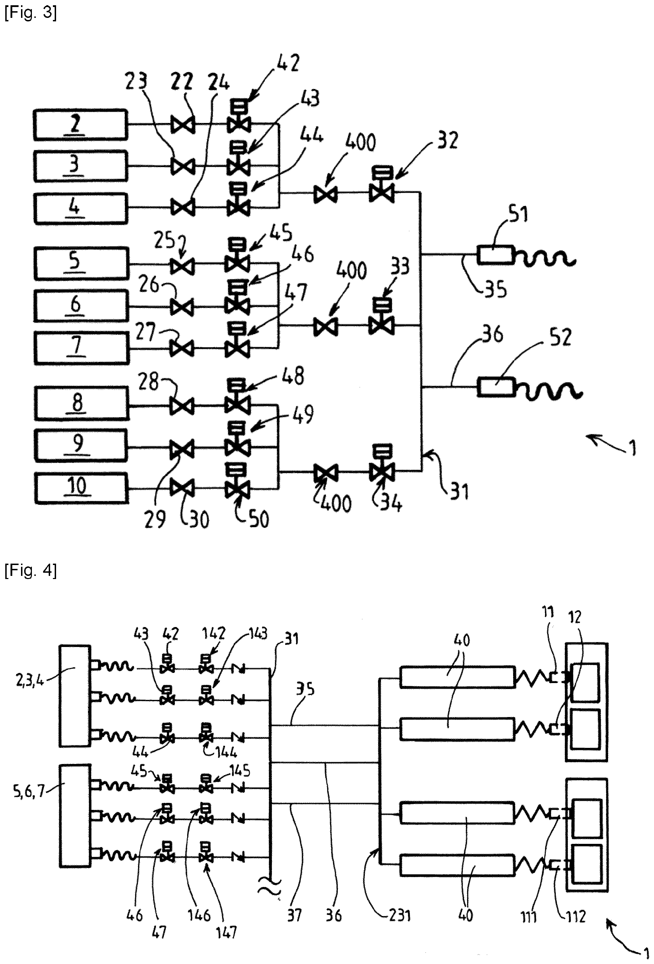

Comme visible aux [Fig. 2] et [Fig. 3], chaque source 2 à 10 comprend une sortie de fluide raccordée à une vanne de sortie 22 à 30 respective. A noter que l'orifice de chaque source et sa vanne associée sont désignés dans la suite par soucis de simplification par le qualificatif « de sortie ». Bien entendu, cet orifice de sortie et cette vanne de sortie associée peuvent être utilisées le cas échéant pour l'entrée de fluide lorsque la source doit être remplie à nouveau (notamment si la source ne dispose pas d'un orifice de remplissage distinct).

Au moins plusieurs de ces vannes 22 à 30 de sortie (et de préférence toutes) sont raccordées en parallèles à chacune des au moins deux terminaisons 11 à 13 de distribution.

Dans les exemples des [Fig. 1] et [Fig. 3], le dispositif 1 comprend deux terminaisons 11, 12 de distribution à l'extrémité aval. Dans l'exemple de la [Fig. 2], le dispositif 1 comprend trois terminaisons 11, 12, 13 de distribution à l'extrémité aval. Dans l'exemple de la [Fig. 4], le dispositif 1 comprend quatre terminaisons 11, 12, 111, 112 de distribution à l'extrémité aval. Tout autre nombre de terminaisons de distribution supérieur à deux peut être envisagé.

Le nombre de sources 2 à 10 de fluide sous pression à l'extrémité amont peut être de trois ([Fig. 1]), neuf ([Fig. 2] ou [Fig. 3], six [Fig. 4] ou tout nombre approprié (quatre, cinq, sept, huit ou plus de neuf).

Ceci permet d'alimenter n'importe quelle terminaison de distribution avec du gaz de n'importe quelle source et permet d'alimenter notamment simultanément deux terminaisons de distribution avec des sources à des pressions ou débits différents.

Comme illustré aux [Fig. 2] et [Fig. 4], les vannes 22 à 30 de sortie peuvent être raccordées en parallèle à une même première conduite collectrice 31 du circuit. En aval, les terminaisons 11, 12, 13 de distribution peuvent être également raccordées en parallèle à cette même première conduite 31 collectrice via des conduites de transfert 35 à 37 respectives parallèles.

Les conduites de transfert 35, 36, 37 adjacentes n'ont de préférence pas de liaison fluidique entre elles, ou ont une liaison fluidique comprenant un organe de restriction configuré pour restreindre ou permettre de restreindre ladite liaison fluidique en réduisant la section de passage du fluide d'une conduite de transfert à l'autre à moins de 10%, préférentiellement moins de 0.1%, de la section de passage du fluide dans une conduite de transfert 35, 36, 37. Par exemple, l'organe de restriction comprend une vanne d'isolation et/ou un orifice calibré.

De même, une vanne de contrôle 42 à 50 amont respective peut être disposée dans le circuit entre chaque vanne de sortie 22 à 30 et la première conduite 31 collectrice.

Une vanne de contrôle aval respective 32, 33, 34 est disposée de préférence dans chaque conduite de transfert 35 à 37 reliant les terminaisons 11, 12, 13 de distribution à la conduite 31 collectrice. Ces vannes de contrôle aval 32, 33, 34, qui permettent d'avoir une double isolation des sources, peuvent cependant être omises.

Comme illustré à la [Fig. 2], la première conduite collectrice 31 du circuit comprend de préférence un ensemble de vanne(s) 131 d'isolement interposées respectivement entre deux conduites de transfert 35, 36, 37 adjacentes. Ces vannes d'isolement 131 permettent, en position fermée, d'isoler une ou plusieurs conduites de transfert des conduites de transfert adjacentes (et donc d'isoler des terminaisons de distribution). En position fermée, ces vannes 131 d'isolement empêchent également le transfert de fluide d'un ensemble de sources vers une ou plusieurs conduites de transfert 35, 36, 37 (et donc vers une ou plusieurs terminaisons de distribution).

Cependant, la présence de la première conduite collectrice 31 et des vannes 131 d'isolement est facultative. C'est-à-dire que ces vannes 131 et les interconnexions entre les groupes de sources peuvent être omises.

Comme schématisé à la [Fig. 2], les sources 2 à 10, les vannes 22 à 30 de contrôle amont, les vannes 32, 33, 34 aval et au moins une partie des conduites de transfert 35 à 37 peuvent être logés sur ou dans un support 54 ou carter source formant une entité physique raccordée de façon amovible au reste (aval) du circuit du dispositif 1 de remplissage. Typiquement, le support 54 est intégré dans un conteneur amovible ou dans un semi-remorque destiné à être remplacé périodiquement sur une mode d'échange plein contre vide.

C'est-à-dire que toute cette partie amont du dispositif 1 peut être mobile et peut être remplacée lorsque les sources sont vides en dessous d'un certain seuil tandis que la partie aval du dispositif 1 peut rester fixe sur le site de remplissage.

A cet effet, les conduites de transfert 35 à 37 peuvent comportent chacune des organes 51, 52, 53 de connexion fluidique amovibles (raccords rapides ou autre) formant des organes de liaison fluidique séparable entre la partie amont du circuit logée dans ou sur le support 54 et l'autre partie aval du circuit reliée deux terminaisons 11 à 13 de distribution.

Le mode de réalisation de la [Fig. 3] se distingue de celui de la [Fig. 2] en ce que les sources 2 à 10 sont reliées plus en aval à une première conduite 31 collectrice. Plus précisément, les sources 2 à 10, leur vanne de sortie respective 22 à 30 et leur vanne de contrôle amont 42 à 50 sont reliées par groupes (de trois dans cet exemple) à une portion de conduite respective munie d'une vanne 32, 33, 34 de contrôle aval. Les vannes de contrôle aval 32 à 34 (trois dans cet exemple) étant reliées en aval à une première conduite 31 collectrice commune. De plus, une vanne 400 (d'isolement ou autre) peut éventuellement être associée en amont de chaque vanne de contrôle aval 32 à 34 dans la portion de conduite raccordée à un ensemble de sources. Cette vanne 400 peut bien entendu être omise.

En aval, deux conduites de transfert 35, 36 sont raccordées en parallèle à la première conduite 31 collectrice commune. Ces deux conduites de transfert 35, 36 peuvent comprendre en aval des organes 51, 52 de connexion fluidique amovibles et/ou une portion flexible destinées à être raccordées en aval aux terminaisons de distributions.

Le mode de réalisation de la [Fig. 4], se distingue de celui de la [Fig. 2] en ce que deux ensembles de sources 2, 34 et 5, 6, 7 sont raccordés en parallèle via plusieurs lignes (six dans cet exemple) à une première conduite 31 collectrice commune. Chaque ligne peut comprendre en série au moins l'un parmi : un raccord rapide, une portion flexible, une première vanne 42 à 47 de contrôle amont, un clapet anti-retour, une seconde vanne 142 à 147 de contrôle amont. En particulier, la seconde vanne 142 à 147 de contrôle amont peut être omise. En outre, il est possible de prévoir, en amont des premières vannes 42 à 47 de contrôle, des vannes de mise à l 'air pour purger les flexibles après connexion de nouvelles sources par exemple.

En aval, plusieurs conduites de transfert 35 à 37 (trois dans cet exemple) sont raccordées en parallèles à la première conduite 31 conduite collectrice commune. En aval, ces trois conduites de transfert 35 à 37 sont raccordées à une seconde conduite 231 conduite collectrice commune.

Les terminaisons 11, 12, 111, 112 de distribution (quatre dans cet exemple) sont raccordées en parallèle à cette seconde conduite 231 conduite collectrice commune.

Les conduites aval comprenant les terminaisons 11, 12, 111, 112 de distribution peuvent comprendre au moins un organe(s) 40 fluidique parmi : un orifice calibré, une soupape de commande, un débitmètre, une vanne pilotée, une soupape de décharge, une portion flexible. Typiquement, la terminaison de distribution ou la conduite aval qui porte la terminaison de distribution comprend au moins un parmi: une vanne automatique d'isolation, un ensemble de vanne(s) manuelle(s) du type "double block and bleed" (isolation pour maintenance), un filtre, un débitmètre, une vanne de contrôle de débit (ou un détendeur piloté, ou un orifice calibré), un transmetteur de pression, une soupape de sécurité, un échangeur de refroidissement, une vanne automatique d'isolation, une soupape de sécurité, un ou deux transmetteurs de pression, une vanne de mise à l'air automatique, une ou deux sondes de température, un système d'arrachement flexible ("break-away"), un flexible et un pistolet ou buse ("nozzle"). Ainsi, le dispositif 1 peut comporter avantageusement plusieurs lignes de connexion (généralement des tuyaux flexibles) entre les sources de gaz transportables et la partie aval fixe. Plusieurs terminaisons de distribution peuvent être reliées à ces lignes de connexion.

Tout ou partie des vannes peuvent être pilotées, notamment automatiquement.

Le pilotage des vannes peut permettre d'alimenter chaque terminal de distribution à partir des différentes sources.

Dans la configuration notamment des [fig. 1] et [fig.2], ceci permet par exemple d'alimenter une terminaison de distribution (premier réservoir à remplir) avec une source à basse pression, tout en ravitaillant simultanément une autre terminaison de distribution avec une autre source à plus haute pression afin de compléter le ravitaillement d'un second réservoir à remplir

De cette manière l'utilisation des conteneurs source (transportable) peut être optimisée car la pression plus basse disponible dans les sources peut être transférée aux véhicules de manière optimale.

Chaque source peut comprendre plusieurs stockages indépendants équipés de vannes respective (généralement de type marche-arrêt) permettant de sélectionner le stockage connecté à une ligne de connexion.

De préférence, un contrôleur électronique (ordinateur, microprocesseur ou autre) peut piloter les vannes pour notamment sélectionner la source la plus appropriée pour alimenter la terminaison de distribution concernée.

Bien entendu, les modes de réalisation ci-dessus ne sont pas limitatifs, notamment quant au nombre de sources, conduites, terminaisons de distribution, vannes...

Le débit de fluide peut être réparti entre plusieurs conduites/lignes lorsque plusieurs sources sont raccordées en parallèle pour le ravitaillement en carburant de très gros réservoirs volumes (par exemple, de trains). Ceci permet de limiter ou réduire le nombre de composants devant être adaptés à des débits très importants.

## Revendications

1. Dispositif de remplissage de réservoirs de gaz sous pression, en particulier de réservoirs d'hydrogène de véhicules, comprenant un circuit de transfert de fluide comprenant une extrémité amont munie d'une pluralité de sources (2 à 10) de fluide sous pression et une extrémité aval comprenant au moins deux terminaisons (11, 12, 13) de distribution destinées chacune à être raccordées à des réservoirs distincts à remplir, chaque source (2 à 10) comprenant une sortie de fluide raccordée à une vanne de sortie (22 à 30), au moins plusieurs des vannes (22 à 30) de sortie étant raccordées en parallèles à chacune des au moins deux terminaisons (11 à 13) de distribution via au moins deux conduites (35 à 37) de transfert parallèles, **caractérisé en ce qu'**au moins une partie des vannes (22 à 30) de sortie sont raccordées en parallèle à une même première conduite collectrice (31) du circuit et **en ce que** les terminaisons (11, 12, 13) de distribution sont également raccordées en parallèle à ladite première conduite (31) collectrice via plusieurs conduites de transfert (35 à 37).

2. Dispositif selon la revendication 1, **caractérisé en ce que** la première conduite collectrice (31) du circuit comprend un ensemble de vanne(s) (131) d'isolement interposée(s) respectivement entre deux conduites de transfert (35, 36, 37) adjacentes.

3. Dispositif selon l'une quelconque des revendications 1 à 2, **caractérisé en ce qu'**une vanne de contrôle (42 à 50) amont respective est disposée dans le circuit entre chaque vanne de sortie (22 à 30) et les au moins deux conduites (35 à 37) de transfert parallèles.

4. Dispositif selon l'une quelconque des revendications 1 à 3, **caractérisé en ce qu'**une vanne de contrôle aval respective (32, 33, 34) est disposée dans chaque conduites de transfert (35 à 37) reliant les terminaisons (11, 12, 13) de distribution aux sources (2 à 10).

5. Dispositif selon l'une quelconque des revendications 1 à 4, **caractérisé en ce que** les conduites de transfert (35, 36, 37) adjacentes n'ont pas de liaison fluidique entre elles, ou ont une liaison fluidique comprenant un organe de restriction configuré pour restreindre ladite liaison fluidique en réduisant la section de passage du fluide d'une conduite de transfert à l'autre à moins de 10%, préférentiellement moins de 0.1%, de la section de passage du fluide dans une conduite de transfert (35, 36, 37).

6. Dispositif selon la revendication 3, **caractérisé en ce que** les sources (2 à 10), les vannes (22 à 30) de contrôle amont, et au moins une partie des conduites de transfert (35 à 37) sont logés sur ou dans un support (54) source formant une entité physique raccordée de façon amovible au reste du circuit du dispositif (1) de remplissage.

7. Dispositif selon la revendication 6, **caractérisé en ce que** les conduites de transfert (35 à 37) comportent chacune des organes (51, 52, 53) de connexion fluidique amovibles formant des organes de liaison fluidique séparable entre la partie du circuit logée dans ou sur le support (54) et l'autre partie du circuit reliée aux terminaisons (11 à 13) de distribution.

8. Dispositif selon l'une quelconque des revendications 1 à 7, **caractérisé en ce que** le circuit comprend plusieurs conduites de transfert (35 à 37), les terminaisons (11 à 13) de distribution étant reliées en parallèles à plusieurs et de préférence à toutes les conduites de transfert (35 à 37) via un ensemble de conduites (39) aval munies de vannes (38) aval.

9. Dispositif selon la revendication 8, **caractérisé en ce que** au moins une partie des conduites aval comprennent respectivement les terminaisons (11, 12, 111, 112) de distribution, lesdites conduites aval comprenant chacune au moins un organe(s) fluidique parmi : un orifice calibré, une soupape de commande, un débitmètre, une vanne pilotée, une soupape de décharge, une portion flexible.

10. Dispositif selon l'une quelconque des revendications 1 à 9, **caractérisé en ce qu'**au moins une partie des vannes (22 à 30, 42 à 50 32 à 34, 38) sont des vannes pilotées.

## Patentansprüche

1. Vorrichtung zum Füllen von unter Druck stehenden Gastanks, insbesondere von Wasserstofftanks für Fahrzeuge, umfassend einen Fluidübertragungskreislauf mit einem stromaufwärtigen Ende, das mit mehreren Quellen (2 bis 10) für unter Druck stehendes Fluid ausgestattet ist, und einem stromabwärtigen Ende, das mindestens zwei Abgabeendpunkte (11, 12, 13) umfasst, die jeweils dazu vorgesehen sind, mit getrennten, zu füllenden Tank verbunden zu sein, wobei jede Quelle (2 bis 10) einen Fluidauslass umfasst, der mit einem Auslassventil (22 bis 30) verbunden ist, wobei mindestens mehrere der Auslassventile (22 bis 30) über mindestens zwei parallele Übertragungsleitungen (35 bis 37) parallel mit jedem der mindestens zwei Abgabeendpunkte (11 bis 13) verbunden sind, **dadurch gekennzeichnet, dass** mindestens ein Teil der Auslassventile (22 bis 30) parallel mit einer gleichen ersten Sammelleitung (31) des Kreislaufs verbunden ist und dass die Abgabeendpunkte (11, 12, 13) über mehrere Übertragungsleitungen (35 bis 37) ebenfalls parallel mit der ersten Sammelleitung (31) verbunden sind.

2. Vorrichtung nach Anspruch 1, **dadurch gekennzeichnet, dass** die erste Sammelleitung (31) des Kreislaufs eine Anordnung eines oder mehrerer Absperrventile (131) umfasst, die jeweils zwischen zwei benachbarten Übertragungsleitungen (35, 36, 37) angeordnet sind.

3. Vorrichtung nach einem der Ansprüche 1 bis 2, **dadurch gekennzeichnet, dass** ein jeweiliges stromaufwärtiges Steuerventil (42 bis 50) im Kreislauf zwischen jedem Auslassventil (22 bis 30) und den mindestens zwei parallelen Übertragungsleitungen (35 bis 37) angeordnet ist.

4. Vorrichtung nach einem der Ansprüche 1 bis 3, **dadurch gekennzeichnet, dass** ein jeweiliges stromabwärtiges Steuerventil (32, 33, 34) in jeder Übertragungsleitung (35 bis 37), die die Abgabeendpunkte (11, 12, 13) mit den Quellen (2 bis 10) verbindet, angeordnet ist.

5. Vorrichtung nach einem der Ansprüche 1 bis 4, **dadurch gekennzeichnet, dass** die benachbarten Übertragungsleitungen (35, 36, 37) keine Fluidverbindung miteinander aufweisen oder eine Fluidverbindung aufweisen, die ein Drosselorgan umfasst, das dazu ausgelegt ist, die Fluidverbindung einzuschränken, indem es den Querschnitt des Fluiddurchgangs von einer Übertragungsleitung zur anderen auf weniger als 10 %, vorzugsweise weniger als 0,1 %, des Querschnitts des Fluiddurchgangs in einer Übertragungsleitung (35, 36, 37) reduziert.

6. Vorrichtung nach Anspruch 3, **dadurch gekennzeichnet, dass** die Quellen (2 bis 10), die stromaufwärtigen Steuerventile (22 bis 30) und zumindest ein Teil der Übertragungsleitungen (35 bis 37) auf oder in einem Quellenträger (54) untergebracht sind, der eine physische Einheit bildet, die lösbar mit dem übrigen Kreislauf der Füllvorrichtung (1) verbunden ist.

7. Vorrichtung nach Anspruch 6, **dadurch gekennzeichnet, dass** die Übertragungsleitungen (35 bis 37) jeweils lösbare Fluidverbindungsorgane (51, 52, 53) aufweisen, die trennbare Fluidverbindungsorgane zwischen dem in oder auf dem Träger (54) untergebrachten Teil des Kreislaufs und dem anderen, mit den Abgabeendpunkten (11 bis 13) verbundenen Teil des Kreislaufs bilden.

8. Vorrichtung nach einem der Ansprüche 1 bis 7, **dadurch gekennzeichnet, dass** der Kreislauf mehrere Übertragungsleitungen (35 bis 37) umfasst, wobei die Abgabeendpunkte (11 bis 13) über einen Satz von mit stromabwärtigen Ventilen (38) ausgestatteten stromabwärtigen Leitungen (39) parallel mit mehreren und vorzugsweise allen Übertragungsleitungen (35 bis 37) verbunden sind.

9. Vorrichtung nach Anspruch 8, **dadurch gekennzeichnet, dass** mindestens ein Teil der stromabwärtigen Leitungen jeweils Abgabeendpunkte (11, 12, 111, 112) umfasst, wobei die stromabwärtigen Leitungen jeweils ein oder mehrere fluidische Organe umfasst, die ausgewählt sind aus: einer kalibrierten Öffnung, einem Steuerventil, einem Durchflussmesser, einem Pilotventil, einem Entlastungsventil, einem flexiblen Abschnitt.

10. Vorrichtung nach einem der Ansprüche 1 bis 9, **dadurch gekennzeichnet, dass** zumindest ein Teil der Ventile (22 bis 30, 42 bis 50, 32 bis 34, 38) Pilotventile sind.

## Claims

1. Device for filling pressurized gas tanks, particularly hydrogen tanks of vehicles, comprising a fluid transfer circuit comprising an upstream end having a plurality of pressurized fluid sources (2 to 10) and a downstream end comprising at least two dispensers (11, 12, 13), each designed to be connected to different tanks to be filled, each source (2 to 10) comprising a fluid outlet connected to an outlet valve (22 to 30), at least several of the outlet valves (22 to 30) being connected in parallel to each of the at least two dispensers (11 to 13) via at least two parallel transfer pipes (35 to 37), **characterized in that** at least some of the outlet valves (22 to 30) are connected in parallel to the same first manifold pipe (31) of the circuit and **in that** the dispensers (11, 12, 13) are also connected in parallel to said first manifold pipe (31) via a plurality of transfer pipes (35 to 37).

2. Device according to Claim 1, **characterized in that** the first manifold pipe (31) of the circuit comprises a set of isolating valve(s) (131), each interposed between two adjacent transfer pipes (35, 36, 37).

3. Device according to any of Claims 1 to 2, **characterized in that** a respective upstream control valve (42 to 50) is placed in the circuit between each outlet valve (22 to 30) and the at least two parallel transfer pipes (35 to 37).

4. Device according to any of Claims 1 to 3, **characterized in that** a respective downstream control valve (32, 33, 34) is placed in each transfer pipe (35 to 37) connecting the dispensers (11, 12, 13) to the sources (2 to 10).

5. Device according to any of Claims 1 to 4, **characterized in that** the adjacent transfer pipes (35, 36, 37) have no fluid connection between them, or have a fluid connection comprising a restriction member configured to restrict said fluid connection by reducing the passage cross section of the fluid from one transfer pipe to another to less than 10%, preferably less than 0.1%, of the passage cross section of the fluid in a transfer pipe (35, 36, 37).

6. Device according to Claim 3, **characterized in that** the sources (2 to 10), the upstream control valves (22 to 30), and at least some of the transfer pipes (35 to 37) are housed on or in a source support (54) forming a physical entity removably connected to the rest of the circuit of the filling device (1).

7. Device according to Claim 6, **characterized in that** the transfer pipes (35 to 37) each comprise removable fluid connection members (51, 52, 53) forming separable fluid connection members between the part of the circuit housed in or on the support (54) and the other part of the circuit connected to the dispensers (11 to 13).

8. Device according to any of Claims 1 to 7, **characterized in that** the circuit comprises a plurality of transfer pipes (35 to 37), the dispensers (11 to 13) being connected in parallel to a plurality, and preferably to all, of the transfer pipes (35 to 37) via a set of downstream pipes (39) having downstream valves (38) .

9. Device according to Claim 8, **characterized in that** at least some of the downstream pipes respectively comprise the dispensers (11, 12, 111, 112), said downstream pipes each comprising at least one fluid member chosen from among: a calibrated aperture, an actuating valve, a flow meter, a controlled valve, a discharge valve, and a hose portion.

10. Device according to any of Claims 1 to 9, **characterized in that** at least some of the valves (22 to 30, 42 to 50, 32 to 34, 38) are controlled valves.
